# EUROPEAN PATENT APPLICATION

(11) **EP 4 654 518 A1**
(43) Date of publication of application: **26.11.2025**
(21) Application number: 25177559.9
(22) Date of filing: 20.05.2025
(51) Int. Cl.: H04L 7/00, G06F 1/3203, H04B 10/40, H04L 41/08

(54) **POWER PROPORTIONALITY IN TRANSCEIVERS**

(30) Priority: 20.05.2024 US 202463649937 P; 31.10.2024 US 202418934172
(71) Applicant: Microsoft Technology Licensing LLC, Redmond, WA 98052-6399 (US)
(72) Inventor: LYUTSAREV, Vasily, Redmond, 98052-6399 (US); SHI, Kai, Redmond, 98052-6399 (US); COSTA, Paolo, Redmond, 98052-6399 (US); BOECKER, Charles, Redmond, 98052-6399 (US); CLETHEROE, Daniel Jonathan Finchley, Redmond, 98052-6399 (US); BENYAHYA, Kaoutar, Redmond, 98052-6399 (US); LIU, Junyi, Redmond, 98052-6399 (US); GOMEZ DIAZ, Ariel, Redmond, 98052-6399 (US); SIEW, Shaw Yohanes, Redmond, 98052-6399 (US)
(74) Representative: Page White Farrer

(57) **Abstract**

A method of transmission, the method comprising: sending, in two or more groups of channels, data and at least one clock signal over an optical link to a receiver, wherein each group in the two or more groups of channels comprises: at least one channel for sending at least one data packet of the data; and a channel for sending a clock signal of the at least one clock signal, wherein the clock signal is synchronized with the at least one data packet in the group of channels.

## Description

### Cross-Referenced to Related Application

This application claims priority to U.S. Provisional Patent Application No. 63/649,937, entitled "IMPLEMENTATION OF DIFFUSION MODELS," filed on May 20, 2024, the disclosure of which is incorporated herein by reference in its entirety.

### Background

Today's data centers can comprise of thousands of racks, each of which might contain tens or more of servers. Inside each server, there is a compute unit, (e.g., Central Processing Units (CPUs), and Graphics Processing Units (GPUs)) as well as storage. These servers can be interconnected with each other through a data center network. The network can be built by many point-to-point links at a given topology, where each link comprises a cable with transceivers attached to each end.

Since the evolution of Al, especially accelerated by large language models (LLMs) such as Generative Pre-Trained Transformers (GPT), more bandwidth is required between data center interconnect links. This drives the required bandwidth of the data center network to increase dramatically. Managing the required bandwidth effectively is becoming increasingly important for data center operators.

Some examples described herein provide a method for managing links between two transceivers in order to save energy used for communication between the two transceivers.

An example usage scenario may be found in optical communication fiber cables, such as those used in data centers.

### Summary

According to one aspect disclosed herein, there is provided a method of transmission, the method comprising: sending, in two or more groups of channels, data and at least one clock signal over an optical link to a receiver, wherein each group in the two or more groups of channels comprises: at least one channel for sending at least one data packet of the data; and a channel for sending a clock signal of the at least one clock signal, wherein the clock signal is synchronized with the at least one data packet in the group of channels.

Thus according to the disclosed method, groups of channels and/or some of the channels can be deactivated depending on an amount of data to be sent on the electrical or optical link. This can save energy used by the transmitter and receiver. It should be noted that at least one of the transmitter and the receiver may comprise a transceiver.

According to further aspects disclosed herein, there are provided a corresponding program and a corresponding apparatus, configured to perform operations corresponding to any embodiment of the methods described herein. According to yet further aspects there are provided corresponding receive-side methods, programs and receiver apparatus.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Nor is the claimed subject matter limited to implementations that solve any or all of the disadvantages noted herein.

### Brief Description of the Drawings

To assist understanding of the present disclosure and to show how embodiments may be put into effect, reference is made by way of example to the accompanying drawings in which:
FIG. 1 is a schematic block diagram of a system comprising transmitter and receiver having serial links;
FIG. 2 is a schematic block diagram of a system for clock synchronization of between each endpoint of the link in FIG. 1;
FIG. 3 is a schematic block diagram of a system comprising transmitter and receiver having parallel links;
FIG.4 is a schematic block diagram for clock forwarding in two channels of the system of FIG. 3;
FIG. 5 is a schematic block diagram of an example method for terminating transmission of a least one channel or group of channels when traffic is low;
FIG. 6 is a schematic block diagram of an example method for terminating transmission of a least one channel or group of channels when traffic is low;
FIG. 7 is a schematic block diagram of an example method for terminating transmission of a least one channel or group of channels when traffic is low;
FIG. 8 shows a method for determining which bits of data are valid;
FIG. 9 is a flow chart describing methods disclosed herein.

### Detailed Description of Embodiments

As mentioned earlier, it is useful to manage links between transceivers depending on an amount of data to be sent between the transceivers. Target usage scenarios include optical communication fiber cables, such as those used in data centers, for example.

Some examples described herein provide a method for synchronizing two clocks, one on a transmitter side and one on a receiver side. The data is sent and received at the speed of the clocks. If the two clocks are asynchronized, it will cause the wrong information to be received by sampling at the wrong time of a data waveform. Some examples described herein can prevent this happening by synchronizing the clocks.

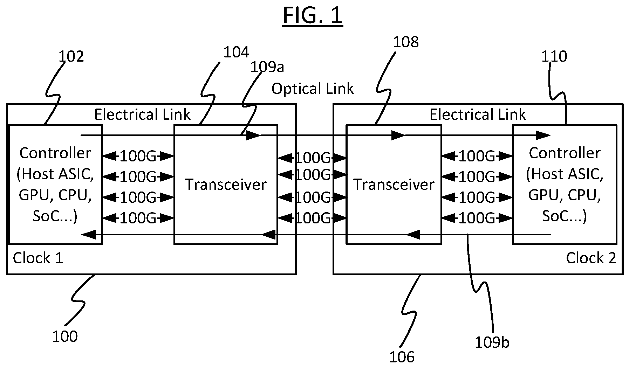

Current transceivers that are used in data centers today are built upon serial links. Such an example is shown in FIG. 1 for a 400G transceiver. In this example, there are 4 x 100Gbps links (although it should be noted that there may be more or fewer links in other examples). Controller 102 has 4 x 100G channels in an electrical link with transceiver 104, which can be used for controller 102 to send data to transceiver 104. Controller 102 may comprise a host application-specific integrated circuit (ASIC), GPU, CPU, System on a Chip (SoC), etc. Controller 102 and transceiver 104 are synchronized with clock 1 100.

Transceiver 104 can send the data received over the electrical link from controller 102 to transceiver 108. In this example, transceiver 104 has 4 x 100G channels in an optical link with transceiver 108 for sending the data to transceiver 108. In some examples, the optical link may be provided by an optical fiber. Transceiver 108 can then send the data received over the optical link to controller 110 using, in this example, 4 x 100G channels in an electrical link. Controller 110 may comprise a host application-specific integrated circuit (ASIC), GPU, CPU, System on a Chip (SoC), etc. Controller 110 and transceiver 108 are synchronized with clock 2 106.

The system of FIG. 1 would typically use high speed components such as Serializer/Deserializer (SerDes), optical modulators and detectors, in order to achieve a data rate of 100G per channel (400G in total). These high-speed components are power-hungry. Between the two endpoints of the link, these high-speed components are controlled by two individual clocks 100 and 106. To ensure that the data is recovered correctly, the two clocks are synchronized. This is achieved by using a clock data recovery (CDR) circuit in the transceivers, where a reference clock can be recovered from the received data stream and can be used to synchronize the two clocks. This means that a continuous data stream is required to keep the two clocks in synchronization. However, traffic patterns in data centers do not typically have a constant bandwidth requirement. The two endpoints will not always require a full 400Gbps bandwidth between them. Depending on the type of workload and application, during a certain period no data may be required to be transmitted over the link. If the high-speed components inside the transceivers, which are power hungry, can be switched to a low power state during these zero-traffic time(s), this can significantly help to reduce power consumption and the data center hosting cost. However, due to the dependency of the clock synchronization on the transmitted data stream, this is not achievable without causing the clocks to become asynchronous.

109a shows a date route from controller 102 to transceiver 104, and then to transceiver 108 and controller 110. The data packets sent on route 109a are all synchronized with clock 1 100. 109b shows a date route for data sent from controller 110 to transceiver 108, and then to transceiver 104 and controller 102. The data packets sent on route 109b are all synchronized with clock 2 106.

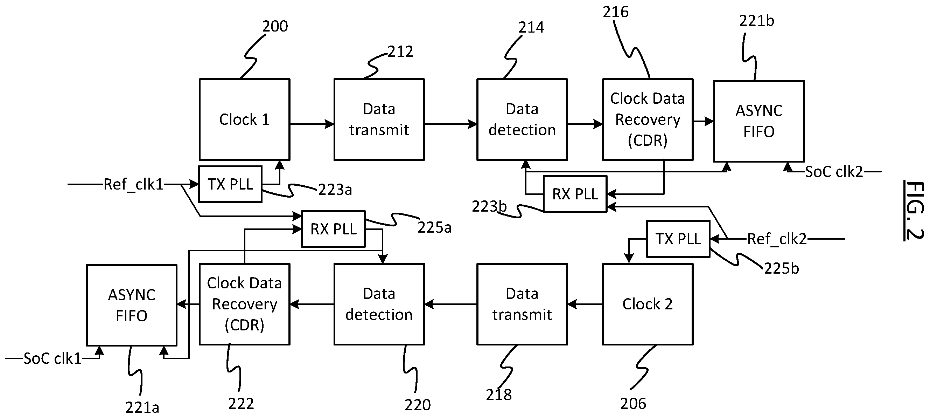

FIG. 2 shows a schematic block diagram for synchronizing the two clocks of FIG. 1 so that data is recovered correctly, as discussed above. Clock 1 200 provides a first clock signal to data transmit block 212, clock data recovery (CDR) circuit 222 and data detection block 220. Clock 2 206 provides a second clock signal to data transmit block 218, CDR circuit 216 and data detection block 214.

Data is sent from transmit block 212 to detection block 214 at the speed of clock 1 200. Reference clock 1 (Ref_clk1) provides a signal to TX Phase Locked Loop (PLL) 223a and to RX PLL 225a. This signal can be used so that data is transmitted from 212 at the speed of Ref_clk1. Data is also sent from transmit block 218 to detection block 220 at the speed of clock 2 206. Reference clock 2 (Ref_clk2) provides a signal to TX Phase Locked Loop (PLL) 223b and to RX PLL 225b. This signal can be used so that data is transmitted from 218 at the speed of Ref_clk2.

CDR circuit 200 can extract the phase difference between clock 1 200 and clock 2 206 and correct the phase difference using RX_PLL 223b and 225a. CDR circuit 216 can detect the phase difference between clock 1 200 and clock 2 206 and corrects the phase difference using RX_PLL 223b and 225b.

Data payload and idle data insertion is performed at blocks 212 and 218. Idle deletion is performed between CDR 216 and asynchronous First In First Out (FIFO) buffer 221b, and idle deletion is also performed between CDR 222 and asynchronous FIFO buffer 221a. These deletions are used for rate matching between the two transceiver clock domains of clock 1 200 and clock 2 206 to the SoC clock domain (SoC_clk1 and SoC_clk2). Data is written into asynchronous FIFO 221b using recovered clock 1 200 and is read out using SoC clock signal 2 (SoC_clk2). Data is written into asynchronous FIFO 221a using recovered clock 2 206 and is read out using SoC clock signal 1 (SoC_clk1).

To allow power proportionality in a transceiver to reduce data center hosting power requirements, some examples described herein use parallel links rather than serial links. Instead of using a relatively small number of higher speed serial links as in FIG. 1, a relatively larger number of lower speed parallel links can be used. Since each one of nG links (where n is link speed) is operating at a lower speed, in some examples lower-cost components such as Light Emitting Diodes (LEDs) and complementary metal oxide semiconductor (CMOS) sensors can be used.

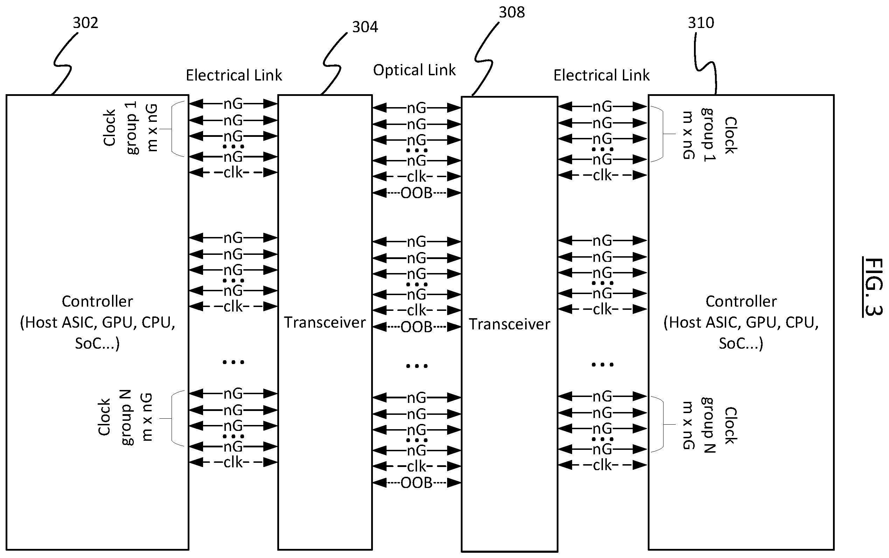

Redundant channels can be added for clock forwarding, as shown in FIG. 3. These redundant channels can be used to break the dependencies of the clock synchronization and the data stream. As an example, shown in FIG. 3, to achieve the same 4 × 100G link, 4 (N=4) groups of 10(m=10) × 10(n=10) G links can be used, with each of the group containing a clock forwarding channel (see the "clk" channels shown in FIG. 3). N is the number of channel groups and m is the number of channels in a group. It should be noted that these numbers for N and m are just examples, it could also be 8 (N=8) groups of 10 (m=10) × 5(n=5) G links in order to achieve a maximum bandwidth of 400G, for example. In this parallel architecture, dummy data does not need to be sent to keep the clocks in synchronization even when there is no traffic between the two endpoints. As a result, channels which do not need to transmit data can be turned off when not required. This reduces power consumption during low utilization periods, reducing overall power consumption by the system.

FIG. 3 shows controllers 302 and 310 that may each comprise one of a host application-specific integrated circuit (ASIC), GPU, CPU, System on a Chip (SoC), etc. FIG. 3 shows controller 302 connected to transceiver 304 by an electrical link (in this example, transceiver 304 may be considered to be a transmitter). The system of FIG. 3 comprises a number, N, of channel groups. Each channel group is synchronized to a specific clock and each channel group comprises a channel that a clock signal ("clk" in FIG. 3) that all of the data within the group is synchronized to. It should be noted that more than one channel group may be synchronized to the same clock. Each channel group has a number, m, of channels. Each channel can support a data rate of nG. The channels may extend across an electrical link between controller 302 and transceiver 304, an optical link between transceiver 304 (in this example, a transmitter) and transceiver 308 (in this example, a receiver) and an electrical link between transceiver 308 and controller 310.

An apparatus may comprise controller 302 and transceiver 304, or they may be part of separate apparatuses. An apparatus may comprise controller 310 and transceiver 308, or they may be part of separate apparatuses. Transceiver 304 sends and receives data and at least one clock signal over the optical link to transceiver 308. The data and at least one clock signal is sent in two or more groups of channels, wherein each group comprises at least one channel for sending at least one data packet of the data; and a channel for sending a clock signal of the at least one clock signal. At least one data packet in the group of channels is synchronized with the clock signal. The data and at least one clock signal sent from transceiver 304 to transceiver 308 can be sent over the electrical link from controller 302 to transceiver 304. The two clock domains can be synchronized, and each clock can be used to send or receive data. If the two clocks are not synchronized (different frequency and/or phase), over time, sampling or recovery of the sent or received data will be wrong.

The amount of data to be sent over the channels of FIG. 3 can be monitored, and depending on the amount of data channels or channel groups may be deactivated. In other words, in some examples only some (but not all) of the channels of a channel group may be deactivated based on the amount of data to be transmitted, and in other examples the whole of one or more channel groups may be deactivated. There is also a possibility of a combination of these two options, where all channels of one or more channel groups are deactivated and some (but not all) of the channels of one or more channel groups are deactivated.

Whenever there is a reduced requirement of the link bandwidth, the components that oversee the data transmission in the data links can be powered off. Since the clock signal is sent with the data, the end points are automatically synchronized when the link is enabled again. In some examples, when the traffic increases, the data links that are powered off can be brought up at a low latency.

Controller 302 or controller 310 can monitor a fullness (e.g., an amount of data packets) in a first in first out (FIFO) buffer in FIG. 3 to determine the amount of data to be sent. The FIFO buffer may be between controller 302 and transceiver 304 or between transceiver 308 and controller 310, for example. In other examples, controller 302 may use a known traffic pattern (e.g., a schedule) of the data to determine the amount of data to be sent. The buffer fullness or known traffic pattern may be used as a trigger to power channels on/off.

To activate or deactivate channels, one of controllers 302 and 310 may send a control signal to their respective transceiver. The control signal can follow the entire data path, e.g., from host controller 302 to transceiver 304 to the transceiver 308 to host controller 310, such that the entire data path is disabled or enabled according to the amount of data (e.g., number of data packets determined to be required to be sent).

In some examples, controller 302 may include an indication in a packet header of one or more data packets sent between controller 302 and transceiver 304 to indicate which channels are to be deactivated or activated.

When the information is obtained at the near end of the link, the information is sent to the far end of the link so the transceivers on both ends of the link can adapt the bandwidth accordingly by powering off a certain amount of the channels. This can be performed by transceiver 304 using the four following methods:
- Using an out of band signal (OOB) as shown in FIG. 3 in the optical link between transceiver 304 and transceiver 308. These are redundant channels between the near and far end transceivers (similar to the clock channels), which can be used to send control signals.
- Adding redundant bits in the data stream to indicate to the far end transceiver 308 as control signals.
- Dedicated control lanes to determine if each chunk of data is valid. The controller may use a channel in at least one group of channels to indicate which data packet(s) comprises valid data.
- Stopping the forwarded clock to signal there isn't any more data to be sent (this could be done by controller 302 and transceiver 304). This automatically stops the data path downstream.

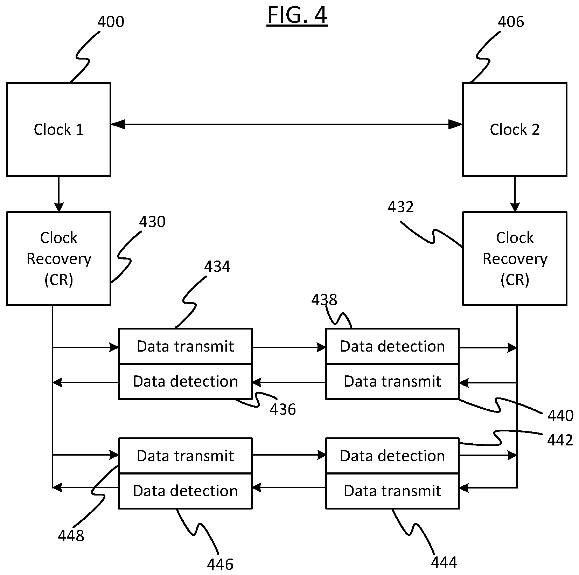

FIG. 4 is a schematic block diagram showing how clock information may be forwarded for two parallel channels in FIG. 3. A first channel comprises blocks 434, 438, 436 and 440. A second channel comprises blocks 448, 442, 444, 446. The first and second channel are in a group that shares the same clock distribution network (clock tree). A clock signal 400 (or clock signal 406) may be forwarded from one end to the other (e.g., from transmitter to receiver). The received clock signal may be weak after transmission, or distorted. Clock recovery blocks 430 and 432 can optionally be used to amplify a clock signal so that it is large enough to feed into a clock distribution network (clock tree) of the first and second channel.

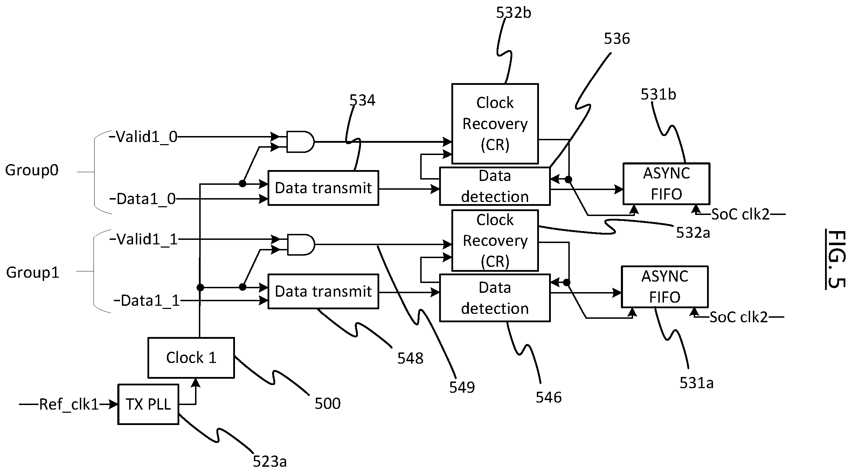

FIG. 5 shows an example method for terminating transmission of a least one channel or group of channels when traffic is low. TX PLL 523a is synchronized with Ref_clk 1 and clock 1 500. Data is transmitted in Group 0 comprising transmit clock 534, data detection block 536, CR circuit 532b and asynchronous FIFO 531b, where the data can be read using SoC_clk2. Data is also transmitted in Group 1 comprising transmit block 548, data detection clock 546, CR circuit 532a and asynchronous FIFO 531a, where the data can be read using SoC_clk2. CR circuit 532a and 532b are optional, and may include a PLL circuit or a tuned delay circuit (a tuned delay circuit may be used in situations where the clock 1 500 has a high enough signal to noise ratio).

Considering an example where there is no data to transmit in group 1, clock 1500 can be stopped at point 549. If CR circuitry 532a is a tuned delay, the clock signal sent to asynchronous FIFO will stop when Tx clock stops. It should be noted that the diagram of FIG. 5 may be repeated in an opposite direction.

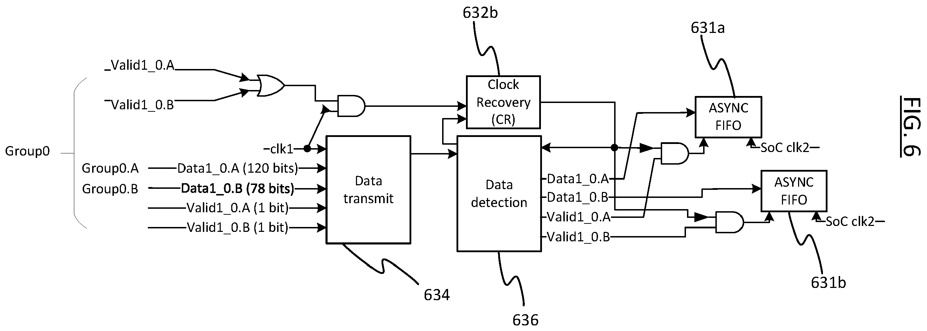

FIG. 6 shows an example method for powering off a channel or group of channels when traffic is low, by adding redundant bits in the data stream to indicate to the far end transceiver which bits in the data stream are valid. The number of bits in each channel are examples only. Data 1_0.A comprises 120 bits, data 1_0.B comprises 78 bits, a single bit (Valid1_0.A) is used to indicate the validity of data 1_0.A and a single bit (Valid1_0.B) is used to indicate the validity of data 1_0.B. Data 1_0.A and data 1_0.B is sent in channel group 0, using transmit block 634, detection block 636, CR block 632b (optional) and asynchronous FIFO blocks 631a and 631b. Data1_0.A and Data1_0.B are from different parallel data bits from the SoC, so the data is controlled independently using Valid1_0.A and Valid1_0B.

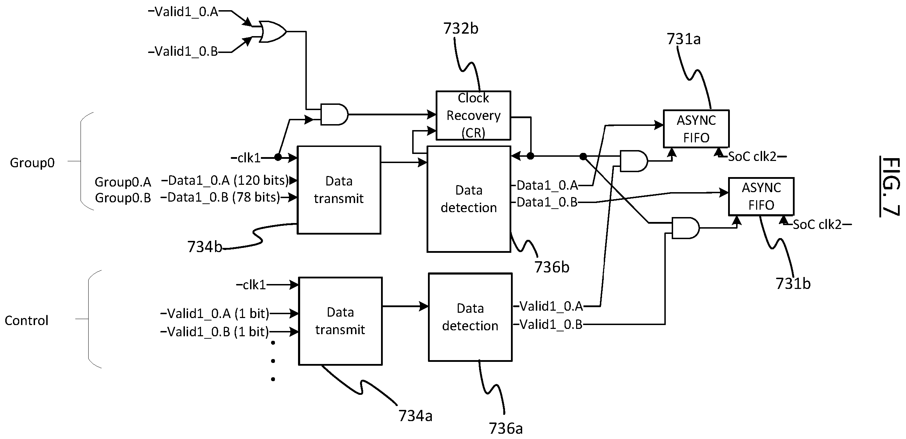

FIG. 7 shows an example method for powering off a channel or group of channels when traffic is low, by using control lanes to determine if each chunk of data is valid. The controller may use a channel in at least one group of channels to indicate which data packet(s) comprises valid data. The number of bits in each channel are examples only. Data 1_0.A comprises 120 bits, data 1_0.B comprises 78 bits, a single bit (Valid1_0.A) is used to indicate the validity of data 1_0.A and a single bit (Valid1_0.B) is used to indicate the validity of data 1_0.B. Data 1_0.A and data 1_0.B is sent in channel group 0, using transmit block 734b, detection block 736b, CR block 732b (optional) and asynchronous FIFO blocks 731a and 731b. Data1_0.A and Data1_0.B are from different parallel data bits from the SoC, so the data is controlled independently using Valid1_0.A and Valid1_0B. Valid1_0.A and Valid1_0.B are sent in a control channel group, using transmit block 734a, detection block 736a,. The method of FIG. 7 differs from the method of FIG. 6 in that the bits for indicating validity are sent independently from the data in FIG. 7.

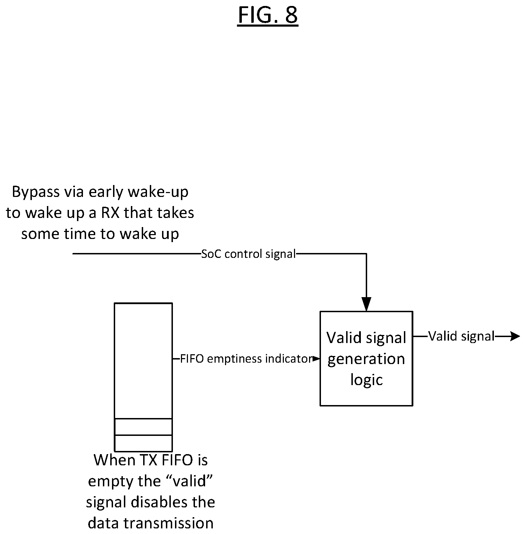

FIG. 8 shows a method for determining whether a signal is valid or not. The validity can then be indicated using the methods of any of FIG. 5 to 7. A Tx FIFO may be located before each of Data.0 (a/b) or Data.1 signals. If the FIFO becomes empty, then the valid signal disables data transmission for the signal. The validity signal can also come directly from a SoC to bypass the FIFO and wake up a receiver earlier.

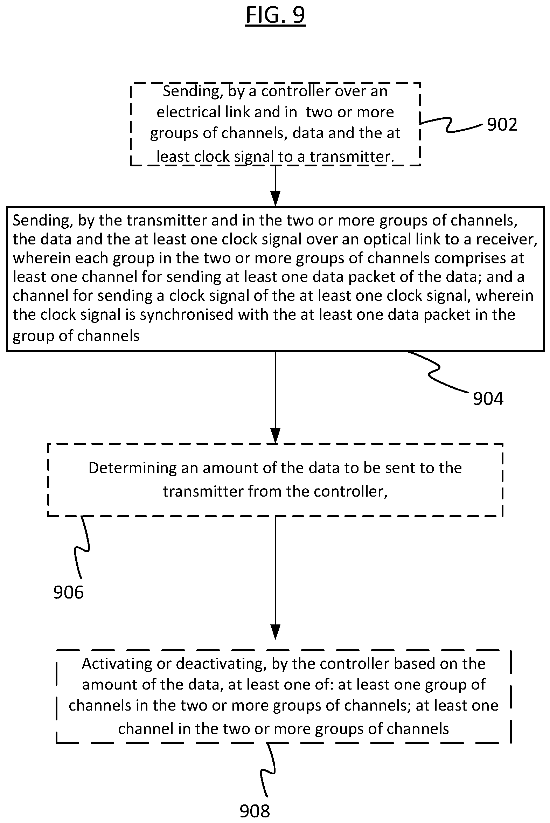

FIG. 9 illustrates a method applied by a transmitter apparatus to transmit data over multiple channels.

At 902, a controller may send, over an electrical link and in two or more groups of channels, data and the at least clock signal to a transmitter.

At 904, the transmitter sends, in the two or more groups of channels, the data and the at least one clock signal over an optical link to a receiver, wherein each group in the two or more groups of channels comprises at least one channel for sending at least one data packet of the data; and a channel for sending a clock signal of the at least one clock signal, wherein the clock signal is synchronized with the at least one data packet in the group of channels.

At 906, the apparatus may determine an amount of the data to be sent to the transmitter from the controller.

At 908, the controller may activate or deactivate, based on the amount of the data, at least one of: at least one group of channels in the two or more groups of channels; at least one channel in the two or more groups of channels.

A receiver performs the inverse of the steps 902 and 904 of Figure 9 in order to receive the data and the at least one clock signal.

All of the disclosed operations or method steps, including those expressed in mathematical terms, may be implemented using suitable machine logic steps.

### CLOSING REMARKS

It will be appreciated that the above embodiments have been disclosed by way of example only.

More generally, according to one aspect disclosed herein, an apparatus comprising: a transmitter for sending, in two or more groups of channels, data and at least one clock signal over an optical link to a receiver, wherein each group in the two or more groups of channels comprises: at least one channel for sending at least one data packet of the data; and a channel for sending a clock signal of the at least one clock signal, wherein the clock signal is synchronized with the at least one data packet in the group of channels.

According to some examples, the apparatus comprises a controller for sending, over an electrical link and in the two or more groups of channels, the data and the at least clock signal to the transmitter.

According to some examples, the controller is configured to determine an amount of the data to be sent to the transmitter from the controller, wherein the controller is configured to activate or deactivate, based on the amount of the data, at least one of: at least one group of channels in the two or more groups of channels; at least one channel in the two or more groups of channels.

According to some examples, the controller is configured to determine the amount of the data to be sent to the receiver based on a number of data packets in a buffer for at least one of: the optical link; the electrical link.

According to some examples, the controller is configured to determine the amount of the data to be sent to the receiver based on a schedule for sending the data.

According to some examples, the controller is configured to activate or deactivate the at least one of: at least one group of channels in the two or more groups of channels; at least one channel in the two or more groups of channels by at least one of: including an indication in a packet header of one or more data packets of the data; sending a control signal to the transmitter.

According to some examples, the controller is configured to stop a clock providing a clock signal associated with a channel or group of channels to indicate that the channel or group of channels is deactivated.

According to some examples, the transmitter is configured to send, to the receiver, an indication of the activation or deactivation of the at least one of: at least one group of channels in the two or more groups of channels; at least one channel in the two or more groups of channels by performing at least one of: using a channel for sending control signals in one or more groups of the two or more groups of channels; including bits indicating the activation or deactivation in the data sent to the receiver.

According to some examples, the controller is configured to use a channel in at least one group of channels to indicate which of the at least one data packet comprises valid data.

According to another aspect disclosed herein, there is provided a method of transmission, the method comprising: sending, in two or more groups of channels, data and at least one clock signal over an optical link to a receiver, wherein each group in the two or more groups of channels comprises: at least one channel for sending at least one data packet of the data; and a channel for sending a clock signal of the at least one clock signal, wherein the clock signal is synchronized with the at least one data packet in the group of channels.

According to another aspect disclosed herein, there is provided a transmitter comprising: memory comprising one or more memory devices, processing apparatus comprising one or more processors, and a transmitting interface for transmitting to a receiver; wherein the memory stores code software arranged to run on the processing apparatus, and configured so as when run on the processing apparatus to perform the method of transmission.

According to another aspect disclosed herein, there is provided an apparatus comprising: a receiver for receiving, in two or more groups of channels, data and at least one clock signal over an optical link from a transmitter, wherein each group in the two or more groups of channels comprises: at least one channel for sending at least one data packet of the data; and a channel for sending a clock signal of the at least one clock signal, wherein the clock signal is synchronized with the at least one data packet in the group of channels.

According to some examples, the apparatus comprises a controller for receiving, over an electrical link and in the two or more groups of channels, the data and the at least clock signal from the receiver.

According to some examples, the receiver is configured to receive an indication of an activation or deactivation of at least one of: at least one group of channels in the two or more groups of channels; at least one channel in the two or more groups of channels by receiving, from the transmitter, at least one of: an indication in a packet header of one or more data packets of the data; a control signal.

According to some examples, the controller is configured to determine that a channel or a group of channels is deactivated based on receiving a clock signal indicating a stopped clock, wherein the clock signal is associated with the channel or the group of channels.

According to some examples, the receiver is configured to receive, from the transmitter, the indication of the activation or deactivation of the at least one of: at least one group of channels in the two or more groups of channels; at least one channel in the two or more groups of channels by receiving at least one of: control signals in a channel of one or more groups of the two or more groups of channels; at least one bit indicating the activation or deactivation in the received data.

According to some examples, the controller is configured to use a clock data recovery circuit and the at least one clock signal to synchronize a clock at the transmitter and a clock of the apparatus.

According to another aspect disclosed herein, there is provided a method of receiving data, the method comprising: receiving, in two or more groups of channels, data and at least one clock signal over an optical link from a transmitter, wherein each group in the two or more groups of channels comprises: at least one channel for sending at least one data packet of the data; and a channel for sending a clock signal of the at least one clock signal, wherein the clock signal is synchronized with the at least one data packet in the group of channels.

According to another aspect, there is provided herein a receiver comprising: memory comprising one or more memory devices, processing apparatus comprising one or more processors, and a receiving interface for receiving from a transmitter; wherein the memory stores code software arranged to run on the processing apparatus, and configured so as when run on the processing apparatus to perform the method of receiving data.

Other variants or use cases may become apparent to a person skilled in the art once given the disclosure herein. The scope of the present disclosure is not limited by the above-described embodiments, but only by the accompanying claims.

## Claims

1. An apparatus comprising:
a transmitter for sending, in two or more groups of channels, data and at least one clock signal over an optical link to a receiver, wherein each group in the two or more groups of channels comprises:
at least one channel for sending at least one data packet of the data; and
a channel for sending a clock signal of the at least one clock signal, wherein the clock signal is synchronized with the at least one data packet in the group of channels.

2. The apparatus of claim 1 comprising a controller for sending, over an electrical link and in the two or more groups of channels, the data and the at least clock signal to the transmitter.

3. The apparatus according to claim 2, wherein the controller is configured to determine an amount of the data to be sent to the transmitter from the controller, wherein the controller is configured to activate or deactivate, based on the amount of the data, at least one of: at least one group of channels in the two or more groups of channels; at least one channel in the two or more groups of channels.

4. The apparatus according to claim 3, wherein the controller is configured to determine the amount of the data to be sent to the receiver based on a number of data packets in a buffer for at least one of: the optical link; the electrical link.

5. The apparatus according to claim 3, wherein the controller is configured to determine the amount of the data to be sent to the receiver based on a schedule for sending the data.

6. The apparatus according to claim 3, wherein the controller is configured to activate or deactivate the at least one of: at least one group of channels in the two or more groups of channels; at least one channel in the two or more groups of channels by at least one of:
including an indication in a packet header of one or more data packets of the data;
sending a control signal to the transmitter.

7. The apparatus according to claim 2, wherein the controller is configured to stop a clock providing a clock signal associated with a channel or group of channels to indicate that the channel or group of channels is deactivated.

8. The apparatus according to claim 3, wherein the transmitter is configured to send, to the receiver, an indication of the activation or deactivation of the at least one of: at least one group of channels in the two or more groups of channels; at least one channel in the two or more groups of channels by performing at least one of:
using a channel for sending control signals in one or more groups of the two or more groups of channels;
including bits indicating the activation or deactivation in the data sent to the receiver.

9. The apparatus according to claim 3, wherein the controller is configured to use a channel in at least one group of channels to indicate which of the at least one data packet comprises valid data.

10. A method of transmission, the method comprising:
sending, in two or more groups of channels, data and at least one clock signal over an optical link to a receiver, wherein each group in the two or more groups of channels comprises:
at least one channel for sending at least one data packet of the data; and
a channel for sending a clock signal of the at least one clock signal, wherein the clock signal is synchronized with the at least one data packet in the group of channels.

11. An apparatus comprising:
a receiver for receiving, in two or more groups of channels, data and at least one clock signal over an optical link from a transmitter, wherein each group in the two or more groups of channels comprises:
at least one channel for sending at least one data packet of the data; and
a channel for sending a clock signal of the at least one clock signal, wherein the clock signal is synchronized with the at least one data packet in the group of channels.

12. The apparatus of claim 11 comprising a controller for receiving, over an electrical link and in the two or more groups of channels, the data and the at least clock signal from the receiver.

13. The apparatus according to claim 12, wherein the controller is configured to determine that a channel or a group of channels is deactivated based on receiving a clock signal indicating a stopped clock, wherein the clock signal is associated with the channel or the group of channels.

14. The apparatus according to claim 11, wherein the receiver is configured to receive an indication of an activation or deactivation of at least one of: at least one group of channels in the two or more groups of channels; at least one channel in the two or more groups of channels by receiving, from the transmitter, at least one of:
an indication in a packet header of one or more data packets of the data;
a control signal.

15. The apparatus according to claim 14, wherein the receiver is configured to receive, from the transmitter, the indication of the activation or deactivation of the at least one of: at least one group of channels in the two or more groups of channels; at least one channel in the two or more groups of channels by receiving at least one of:
control signals in a channel of one or more groups of the two or more groups of channels;
at least one bit indicating the activation or deactivation in the received data.
